# EUROPÄISCHE PATENTSCHRIFT

(11) **EP 1 400 277 B1**
(45) Veröffentlichungstag und Bekanntmachung des Hinweises auf die Patenterteilung: **18.10.2006**
(21) Anmeldenummer: 03019546.5
(22) Anmeldetag: 29.08.2003
(51) Int. Cl.: B01D 53/32

(54) **Vorrichtung und Verfahren zur Reinigung eines gasförmigen Fluids**
Method and apparatus for the purification of a gaseous fluid
Procédé et dispositif pour la purification d'un fluide gazeux

(30) Priorität: 17.09.2002 DE 10243790
(43) Veröffentlichungstag der Anmeldung: 24.03.2004
(73) Patentinhaber: Deutsches Zentrum für Luft- und Raumfahrt e.V., 51147 Köln (DE)
(72) Erfinder: Renz, Günther, Dr., 70794 Filderstadt (DE); Nedele, Martin, Dr., 72768 Reutlingen (DE)
(74) Vertreter: Hoeger, Stellrecht & Partner Patentanwälte

(56) Entgegenhaltungen:
- EP-A- 0 211 768
- EP-A- 0 635 311
- DE-A- 4 026 800
- US-A- 5 137 701

## Beschreibung

Die Erfindung betrifft eine Vorrichtung zur Reinigung eines Fluids, umfassend eine Pyrolysevorrichtung mit einer Pyrolysezelle, in welcher das Fluid mit einer stehenden elektromagnetischen Welle beaufschlagbar ist.

Ferner betrifft die Erfindung ein Verfahren zur Reinigung eines Fluids, bei dem das Fluid durch eine Pyrolysezelle geführt wird, welche mit einer stehenden elektromagnetischen Welle beaufschlagt wird.

Pyrolysevorrichtungen sind aus der EP 0 489 078 B1 oder aus der nicht vorveröffentlichten DE 101 43 375 C1 bekannt. In ihnen erfolgt eine Reinigung des Fluids, insbesondere eines gasförmigen Fluids wie Luft, durch Pyrolyse, d. h. durch thermische Zersetzung chemischer Verbindungen mit oder ohne Sauerstoffzutritt. Es lassen sich dann organische Dämpfe wie Lösemitteldämpfe entsorgen, indem die entsprechenden organischen Moleküle über Mikrowellenbeaufschlagung pyrolysiert werden. In dem Mikrowellenplasma herrscht ein hoher Aktivierungsgrad, der zum Abbau der organischen Moleküle wie Kohlenwasserstoffe führt.

Aus der EP 0 635 311 A1 ist ein Pyrolyseabbauverfahren bekannt.

Aus der DE 40 26 800 A1 ist ein Verfahren zur Entsorgung von organischen Dämpfen, insbesondere von Lösemitteldämpfen, bekannt, bei dem die organischen Dämpfe durch ein elektromagnetisches Wechselfeld hindurchgeleitet und dort unter Energieaufnahme ionisiert und/oder dissoziiert werden.

Aus der US 5,137,701 ist ein Verfahren zur Elimination von korrosiven Gasen bekannt, bei dem das korrosive Gas mit einem Reaktantengas gemischt wird, die Gasmischung in eine Reaktionskammer eingeführt wird und chemische Reaktionen in der Reaktionskammer durch Plasmasbildung in dem Mischungsgas gefördert werden.

Aus der EP 0 211 768 A2 ist eine Rekuperationsvorrichtung bekannt.

Aus der US 3,996,009 ist eine Vorrichtung zur Detektion der Menge einer spezifischen Komponente in einer Probe bekannt. Die Vorrichtung umfaßt einen Gaschromatografen, eine Kühlfalle und einen Gasdetektor. Die Kühlfalle weist Mittel zur Kühlung des Gases auf, welches durch sie hindurchgeführt wird.

Davon ausgehend liegt der Erfindung die Aufgabe zugrunde, eine Vorrichtung zu schaffen, welche eine hohe Reinigungseffizienz aufweist.

Diese Aufgabe wird bei der eingangs genannten Vorrichtung erfindungsgemäß dadurch gelöst, daß der Pyrolysevorrichtung eine Kühlfalle zum Abscheiden von Verunreinigungen des Fluids vorgeschaltet ist, durch welche das Fluid vor Eintritt in die Pyrolysezelle geführt ist.

Eine Pyrolysevorrichtung mit einer stehenden elektromagnetischen Welle insbesondere im Mikrowellenbereich arbeitet optimal für kleine Schadstoffkonzentrationen unterhalb der Sättigungsgrenze. Zu hohe Schadstoffkonzentrationen können das Entstehen von Verkokungsprodukten fördern, die wiederum zu Ablagerungen führen und einen instabilen Zustand des Plasmas bewirken können, das sich in der Pyrolysezelle ausbildet.

Erfolgt eine Vorreinigung durch Abscheiden von Schadstoffen über Kondensation, wie beispielsweise dem Verflüssigen von Kohlenwasserstoffen oder durch Sublimation, dann erhält man eine optimierte Reinigung, da sich ein hoher Volumenanteil der Schadstoffe mittels der Kühlfalle abscheiden läßt und sich anschließend in einem nachgeschalteten Schritt das Restfluid mit hoher Abbaurate der Verunreinigungsmoleküle reinigen läßt.

Durch die erfindungsgemäße Vorrichtung erhält man einen effektiven Reinigungsbetrieb, der bezüglich Störungsfreiheit optimiert ist, wobei gleichzeitig ein sehr hoher Reinigungsgrad erreicht wird, da eben das Restfluid in der Pyrolysevorrichtung weiter gereinigt wird.

Es läßt sich dann mit Kohlenwasserstoff verunreinigte Luft, wie beispielsweise mit Kraftstoff belastete Absaugluft an Tankstellen, sehr effektiv reinigen, wobei die gereinigte Luft einen sehr geringen Restanteil an Schadstoffen aufweist.

Günstig ist es, wenn die Kühlfalle so einstellbar und/oder ausgebildet ist, daß Kohlenwasserstoffe abscheidbar und insbesondere verflüssigbar sind. Insbesondere liegt dabei die Temperatur in der Kühlfalle unter 0°C und insbesondere im Bereich bis ca. -40°C. Dadurch läßt sich eine Vielzahl von organischen Stoffen abscheiden, so daß die Vorrichtung zur effektiven Reinigung auch von Gemischen einsetzbar ist.

Weiterhin ist es günstig, wenn der Kühlfalle eine Filtervorrichtung vorgeschaltet ist. Über die Filtervorrichtung, die insbesondere Wasser ausfiltert und/oder Adsorptionsfilter aufweist, kann erreicht werden, daß der Kühlfalle weitgehend wasserfreies Fluid zugeführt wird, so daß dort keine Probleme mit Wasservereisung auftreten.

Insbesondere umfaßt dann die Filtervorrichtung eine Trocknungsvorrichtung für das Fluid, um so eben das Fluid zu trocknen, bevor es der Kühlfalle zugeführt wird.

Durch die Ausbildung der Trocknungsvorrichtung als Wasserabscheider läßt sich somit Wasser aus dem Fluid abscheiden.

Es kann vorgesehen sein, daß die Trocknungsvorrichtung hygroskopische Trocknungsmittel wie Silika oder NaOH aufweist, um das Fluid vor Zuführung zur Kühlfalle zu trocknen.

Weiterhin ist es günstig, wenn die Filtervorrichtung beheizbar ist. Dadurch läßt diese sich ausheizen und damit lassen sich beispielsweise die Trocknungsmittel ausheizen. Auf diese Weise ist es möglich, die Filtervorrichtung zu regenerieren.

Ganz besonders vorteilhaft ist es dann, wenn ein Ausgang der Filtervorrichtung mit einem Eingang der Pyrolysevorrichtung verbunden ist, wobei insbesondere die Kühlfalle überbrückt ist. Da das Abgasfluid beim Ausheizen auch Verunreinigungen enthalten kann, muß dieses Abgasfluid ebenfalls gereinigt werden. Da die Verunreinigungskonzentration in dem Abgasfluid niedrig ist, kann dieses Abgasfluid direkt über die Pyrolysevorrichtung gereinigt werden.

Es ist günstig, wenn die Vorrichtung eine oder mehrere Ankopplungen für Spülgas aufweist. Dadurch läßt sich die Vorrichtung und insbesondere die Filtervorrichtung spülen. Beispielsweise ist als Spülgas Luft vorgesehen, so daß beim Ausheizen der Filtervorrichtung und gleichzeitigem Spülen auch der Pyrolysevorrichtung Sauerstoff zugeführt wird, um in der Pyrolysezelle Sauerstoff aktivieren zu können, welcher wiederum zu der Zerlegung von organischen Verbindungen beiträgt.

Die Vorrichtung läßt sich auf energieeffiziente Weise, d. h. mit hohem energetischem Wirkungsgrad, betreiben, wenn Abwärme von der Pyrolysevorrichtung und/oder der Kühlfalle der Filtervorrichtung zuführbar ist. Dadurch ist die Filtervorrichtung zum Ausgasen mittels der Pyrolysevorrichtung und/oder der Kühlfalle beheizbar.

Insbesondere ist dann eine Leitung für Abwärme zwischen der Pyrolysevorrichtung und der Filtervorrichtung angeordnet und/oder eine Leitung für Abwärme zwischen der Kühlfalle und der Filtervorrichtung angeordnet. Die Pyrolysevorrichtung muß gekühlt werden; die dabei entstehende Abwärme läßt sich dann über ein Wärmeübertragungsmedium wie Wasser oder Silikonöl durch diese Leitung direkt der Filtervorrichtung zuführen. Da auch die Kühlfalle gekühlt wird, läßt sich die entstehende Abwärme ebenfalls zum Beheizen der Filtervorrichtung nutzen.

Ganz besonders vorteilhaft ist es, wenn die Pyrolysevorrichtung einen Mikrowellengenerator, einen Hohlleiter, welcher an den Mikrowellengenerator gekoppelt ist, und ein Fluidrohr umfaßt, durch welches ein Fluid quer zur Ausbreitungsrichtung der stehenden Welle führbar ist, wobei die Pyrolysezelle in dem Fluidrohr gebildet ist. Eine derartige Pyrolysevorrichtung ist in der EP 0 489 078 B1 beschrieben, auf die ausdrücklich Bezug genommen wird. Ferner ist eine solche Pyrolysevorrichtung in der DE 101 43 375 C1 beschrieben. Auch auf dieses Dokument wird ausdrücklich Bezug genommen.

Insbesondere ist es vorteilhaft, wenn die Pyrolysezelle durch ein erstes Metallgitter und ein in einer Fluidführungsrichtung beabstandet angeordnetes zweites Metallgitter begrenzt ist. Es läßt sich dann eine hohe Energiedichte in einen räumlich begrenzten Bereich einkoppeln, so daß in diesem Bereich im Fluidrohr ein hoher Aktivierungsgrad herrscht; durch eine solche Anordnung wird eine Plasmaverschleppung weitgehend vermieden. Es wird in diesem Zusammenhang auf die DE 101 43 375 C1 verwiesen.

Ferner liegt der Erfindung die Aufgabe zugrunde, das eingangs genannte Verfahren so zu verbessern, daß eine hohe Reinigungseffizienz erreicht wird.

Diese Aufgabe wird bei dem gattungsgemäßen Verfahren erfindungsgemäß dadurch gelöst, daß das Fluid vor Eintritt in die Pyrolysezelle durch eine Kühlfalle geführt wird.

Die Vorteile des erfindungsgemäßen Verfahrens wurden bereits im Zusammenhang mit der erfindungsgemäßen Vorrichtung erläutert.

Weitere vorteilhafte Ausgestaltungen wurden ebenfalls bereits im Zusammenhang mit der erfindungsgemäßen Vorrichtung erläutert.

Insbesondere wird erfindungsgemäß das Fluid vor Eintritt in die Kühlfalle durch eine Filtervorrichtung geführt und das Fluid in der Filtervorrichtung getrocknet, um Wasser auszuscheiden und somit die im Zusammenhang mit Wasservereisung entstehenden Probleme in der Kühlfalle zu vermeiden.

Wenn beim Ausheizen der Filtervorrichtung diese an die Pyrolysevorrichtung gekoppelt ist oder wird, dann lassen sich Verunreinigungen in dem Abgasfluid reinigen, so daß auch bei der Wartung oder Reinigung der Filtervorrichtung keine Schadstoffbelastung der Umgebung entsteht.

Ein einfacher Aufbau und ein hoher Wirkungsgrad läßt sich erreichen, wenn die Filtervorrichtung mit Abwärme der Pyrolysevorrichtung und/oder der Kühlfalle beheizt wird.

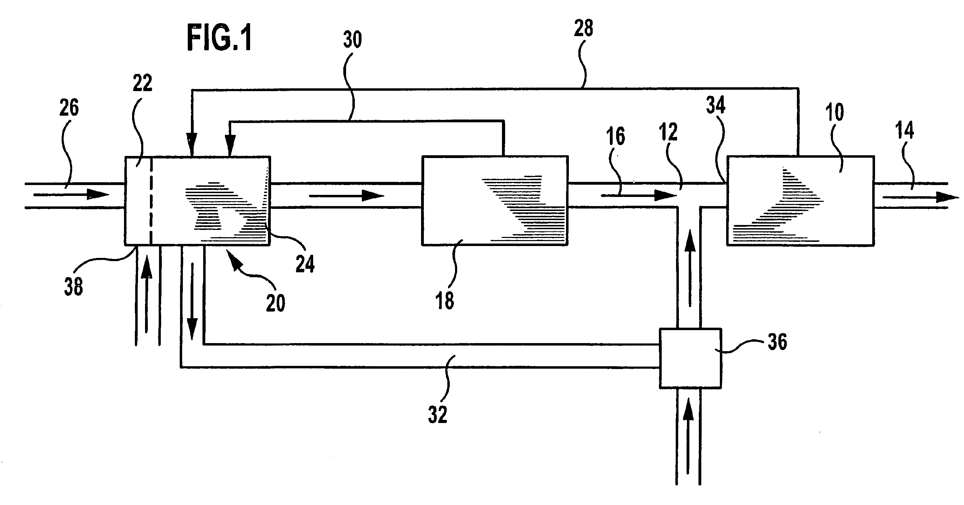

Die nachfolgende Beschreibung einer bevorzugten Ausführungsform dient im Zusammenhang mit der Zeichnung der näheren Erläuterung der Erfindung. Es zeigt die einzige
- Figur 1: eine schematische Darstellung eines Ausführungsbeispiels einer erfindungsgemäßen Vorrichtung zur Reinigung eines Fluids.

Ein Ausführungsbeispiel einer erfindungsgemäßen Vorrichtung zur Reinigung eines Fluids umfaßt eine Pyrolysevorrichtung 10. Dieser wird zu reinigendes Fluid über eine Leitung 12 zugeführt und gereinigtes Fluid über eine Leitung 14 abgeführt.

Die Pyrolysevorrichtung 10 umfaßt dabei einen Mikrowellengenerator und einen Hohlleiter, welcher an den Mikrowellengenerator gekoppelt ist und in dem eine stehende Welle erzeugbar ist. Ferner ist ein Fluidrohr vorgesehen, durch welches ein Fluid quer zur Ausbreitungsrichtung der stehenden Welle führbar ist, wobei in dem Fluidrohr eine Pyrolysezelle gebildet ist, in der das Fluid durch die stehende elektromagnetische Welle beaufschlagbar ist. Eine derartige Vorrichtung ist in der EP 0 489 078 B1 offenbart, auf die hiermit ausdrücklich Bezug genommen wird.

Ferner ist eine solche Vorrichtung in der nicht vorveröffentlichten DE 101 43 375 C1 offenbart. Auf dieses Dokument wird ebenfalls ausdrücklich Bezug genommen.

Es ist insbesondere vorgesehen, daß die Pyrolysezelle in Richtung eines Auslasses durch ein Metallgitter begrenzt ist und insbesondere die Pyrolysezelle durch zwei beabstandete Metallgitter begrenzt ist. In diesem Zusammenhang wird auf die DE 101 43 375 C1 Bezug genommen.

Der Pyrolysevorrichtung 10 ist in der Leitung 12 bezogen auf eine Fluidführungsrichtung 16 eine Kühlfalle 18 vorgeschaltet, mittels der sich Verunreinigungen kondensieren und dadurch abscheiden lassen. Die Kühlfalle 18 wird vorzugsweise mit einer Temperatur unter 0°C so betrieben, daß sich Kohlenwasserstoffe verflüssigen lassen und damit in der Kühlfalle 18 Kohlenwasserstoffe abgeschieden werden. Bei einer Temperatur von -40°C fallen dabei die meisten in der Praxis relevanten organischen Stoffe aus.

Der Kühlfalle 18 ist in der Leitung 12 eine als Ganzes mit 20 bezeichnete Filtervorrichtung vorgeschaltet. Diese weist bei einer Variante einer Ausführungsform einen Adsorptionsfilter 22 wie beispielsweise einen Kohlefilter auf.

Alternativ oder zusätzlich kann es vorgesehen sein, daß die Filtervorrichtung 20 eine Trocknungsvorrichtung 24 umfaßt, in welcher sich das Fluid trocknen läßt. Beispielsweise ist die Trocknungsvorrichtung 24 als Wasserabscheider ausgebildet und/oder es sind Trocknungsmittel wie NaOH oder Silika vorgesehen.

Eine Zuführungsleitung 26 ist an die Filtervorrichtung 20 gekoppelt, über die dann das zu reinigende Fluid und insbesondere ein zu reinigendes Gas wie Luft der Vorrichtung zugeführt wird. Dieses Fluid durchläuft die Filtervorrichtung 20, die nachgeschaltete Kühlfalle 18 und die Pyrolysevorrichtung 10.

Die Filtervorrichtung 20 ist extern beheizt, um diese und insbesondere ihre Trocknungsmittel bzw. einen Adsorptionsfilter ausheizen zu können. Erfindungsgemäß ist es vorgesehen, daß eine Leitung 28 für Abwärme zwischen der Pyrolysevorrichtung 10 und der Filtervorrichtung 20 angeordnet ist, in der ein Wärmeübertragungsmedium wie Wasser sich von der Pyrolysevorrichtung 10 zu der Filtervorrichtung 20 transportieren läßt. Dadurch läßt sich bei Betrieb der Pyrolysevorrichtung 10 entstehende Abwärme (die Pyrolysevorrichtung 10 muß gekühlt werden) zur Heizung der Filtervorrichtung 20 nutzen.

Es kann auch vorgesehen sein, daß eine Leitung 30 für Abwärme zwischen der Kühlfalle 18 und der Filtervorrichtung 20 angeordnet ist, um so Abwärme der Kühlfalle 18 an die Filtervorrichtung 20 abzugeben.

Vorzugsweise ist eine Steuerungsvorrichtung vorhanden (in der Figur nicht gezeigt), über die sich die an die Filtervorrichtung 20 abgegebene Wärmemenge steuern läßt.

Von der Filtervorrichtung 20 führt eine Bypass-Leitung 32 zu einem Eingang 34 der Pyrolysevorrichtung 10. Über diese Bypass-Leitung läßt sich während eines Ausgasvorgangs der Filtervorrichtung 20, um diese zu trocknen oder zu reinigen und den Filter 22 zu regenerieren, belastetes Abgasfluid der Pyrolysevorrichtung 10 zur Reinigung zuführen.

In der Bypass-Leitung 32 ist eine Ankopplung 36 vorgesehen, über die sich Frischluft oder Sauerstoff einkoppeln läßt, um der Pyrolysevorrichtung 10 Sauerstoff bereitstellen zu können, damit das Abgasfluid gereinigt werden kann. Weiterhin läßt sich hierüber Luft und/oder Sauerstoff der Pyrolysevorrichtung zuführen, um bei der Fluidreinigung in der Pyrolysezelle einen höheren Anteil aktivierten Sauerstoffs bereitzustellen.

An die Filtervorrichtung 20 ist ferner eine Ankopplung 38 für Spülgas angeordnet, über welche Spülgas einkoppelbar ist, um die Filtervorrichtung 20 zu spülen. Bei dem Spülgas kann es sich beispielsweise um Luft oder Sauerstoff oder um Stickstoff handeln.

Die erfindungsgemäße Vorrichtung funktioniert wie folgt:

Zu reinigendes Fluid, bei dem es sich insbesondere um belastete Luft handelt, die mit leichtflüchtigen Kohlenwasserstoffen und deren Derivaten (halogenierte und nitridierte Kohlenwasserstoffe) verunreinigt ist, wird der Filtervorrichtung 20 über die Zuführungsleitung 26 zugeführt. In der Trocknungsvorrichtung 24 wird dann die Luft getrocknet, wobei es sich um eine chemische Lufttrocknung über Trocknungsmittel wie NaOH handeln kann.

Nach Durchlaufen der Filtervorrichtung 20 wird das verunreinigte Fluid der Kühlfalle 18 zugeführt. Dort findet eine Kondensation (Desublimation oder Verflüssigung) der Verunreinigungen und insbesondere von Kohlenwasserstoffen statt, wobei eben die Kühlfalle so eingestellt wird, daß beispielsweise eine Verflüssigung stattfindet. Ein großer Anteil von Schadstoffen wird dann aus dem Gasstrom abgeschieden.

Anschließend wird die Luft, die noch Restverunreinigungen enthält, der Pyrolysevorrichtung 10 zugeführt, wo ein Mikrowellenplasma eine thermische Zersetzung der chemischen Verbindungen (Pyrolyse) mit oder ohne Sauerstoffzutritt bewirkt.

Durch einen solchen dreistufigen Reinigungsprozeß läßt sich ein hoher Reinigungsgrad erreichen. Insbesondere läßt sich mit der Kühlfalle 18 ein großer Anteil der Kohlenwasserstoffe in der Luft verflüssigen, so daß die Pyrolysevorrichtung 10 ein Fluid erhält, in dem die Verunreinigungen weit unterhalb der Sättigungsgrenze liegen. Dadurch kann die Pyrolysevorrichtung 10 optimiert arbeiten und damit eine nahezu vollständige Abbaurate bezüglich der Verunreinigungen erreichen.

Die Pyrolysevorrichtung 10 führt damit eine Nachreinigung der in der Kühlfalle 18 vorgereinigten Luft durch.

Durch die erfindungsgemäße Vorrichtung lassen sich vorteilhaft Gemische reinigen.

Bei einer chemischen Trocknung nehmen die Trocknungsmittel der Trocknungsvorrichtung 24 selber Wasser auf. Um hier wieder eine Trocknung zu bewirken, ist es vorgesehen, daß ein Spülgas und insbesondere unbelastete Luft über die Ankopplung 38 zugeführt wird und gleichzeitig die Trocknungsvorrichtung 24 beheizt wird. Das dabei entstehende Abgasfluid ist belastet. Es wird dann über die Bypass-Leitung 32 der Pyrolysevorrichtung 10 zugeführt, um eben dieses belastete Fluid zu reinigen.

Während des Ausgasvorgangs der Trocknungsvorrichtung 24 ist die Kühlfalle 18 stillgelegt und insbesondere über die Bypass-Leitung 32 überbrückt.

Das erfindungsgemäße Verfahren läßt sich beispielsweise dazu nutzen, mit Kraftstoff belastete Absaugluft an einer Tankstelle zu reinigen. Es wird dabei in der Filtervorrichtung 20 NaOH oder Silika als Trocknungsmittel verwendet. Der Kraftstoff schlägt sich in geringen Mengen nieder; durch anschließendes externes Ausheizen kann die Filtervorrichtung 20 gereinigt werden.

Als Kühlfalle 18 wird ein Kühlschrankkühler verwendet, der eine effektive Verflüssigung der Kohlenwasserstoffe bewirkt, da deren Dampfdruckkurven Hyperbeln sind. Aufgrund der Trocknung in der Filtervorrichtung 20 kann der verflüssigte Kraftstoff beispielsweise Dieselkraftstoff zugemischt werden, da beim Eintritt in die Kühlfalle 18 im wesentlichen kein Wasser mehr vorhanden ist.

Die noch verbleibenden Verunreinigungen in der Absaugluft werden dann in dem Mikrowellenplasma der Pyrolysevorrichtung 10 in ungefährliche Stoffe wie CO₂ und Wasser abgebaut.

## Patentansprüche

1. Vorrichtung zur Reinigung eines gasförmigen Fluids, umfassend eine Pyrolysevorrichtung (10) mit einer Pyrolysezelle, in welcher das Fluid mit einer stehenden elektromagnetischen Welle beaufschlagbar ist, und eine der Pyrolysevorrichtung (10) vorgeschaltete Kühlfalle (18) zum Abscheiden von Verunreinigungen, durch welche das Fluid vor Eintritt in die Pyrolysezelle geführt ist.

2. Vorrichtung nach Anspruch 1, **dadurch gekennzeichnet, daß** die Kühlfalle (18) so einstellbar und/oder ausgebildet ist, daß Kohlenwasserstoffe abscheidbar sind.

3. Vorrichtung nach Anspruch 1 oder 2, **dadurch gekennzeichnet, daß** der Kühlfalle (18) eine Filtervorrichtung (20) vorgeschaltet ist, durch welche das Fluid vor Eintritt in die Kühlfalle (18) geführt ist.

4. Vorrichtung nach Anspruch 3, **dadurch gekennzeichnet, daß** die Filtervorrichtung (20) eine Trocknungsvorrichtung (24) für das Fluid umfaßt.

5. Vorrichtung nach Anspruch 4, **dadurch gekennzeichnet, daß** die Trocknungsvorrichtung (24) als Wasserabscheider ausgebildet ist.

6. Vorrichtung nach Anspruch 4 oder 5, **dadurch gekennzeichnet, daß** die Trocknungsvorrichtung (24) hygroskopische Trocknungsmittel aufweist.

7. Vorrichtung nach einem der Ansprüche 3 bis 6, **dadurch gekennzeichnet, daß** die Filtervorrichtung (20) beheizbar ist.

8. Vorrichtung nach einem der Ansprüche 3 bis 7, **dadurch gekennzeichnet, daß** ein Ausgang der Filtervorrichtung (20) mit einem Eingang (34) der Pyrolysevorrichtung (10) verbindbar ist.

9. Vorrichtung nach einem der vorangehenden Ansprüche, **dadurch gekennzeichnet, daß** die Vorrichtung eine oder mehrere Ankopplungen (36; 38) für Spülgas aufweist.

10. Vorrichtung nach einem der Ansprüche 3 bis 9, **dadurch gekennzeichnet, daß** Abwärme von der Pyrolysevorrichtung (10) und/oder der Kühlfalle (18) der Filtervorrichtung (20) zuführbar ist.

11. Vorrichtung nach Anspruch 10, **dadurch gekennzeichnet, daß** eine Leitung (28) für Abwärme zwischen der Pyrolysevorrichtung (10) und der Filtervorrichtung (20) angeordnet ist.

12. Vorrichtung nach Anspruch 10 oder 11, **dadurch gekennzeichnet, daß** eine Leitung (30) für Abwärme zwischen der Kühlfalle (18) und der Filtervorrichtung (20) angeordnet ist.

13. Vorrichtung nach Anspruch 11 oder 12, **dadurch gekennzeichnet, daß** Wärme von der Pyrolysevorrichtung (10) an die Filtervorrichtung (20) mittels eines Wärmeübertragungsmediums übertragbar ist.

14. Vorrichtung nach einem der vorangehenden Ansprüche, **dadurch gekennzeichnet, daß** die Pyrolysevorrichtung (10) einen Mikrowellengenerator, einen Hohlleiter, welcher an den Mikrowellengenerator gekoppelt ist, und ein Fluidrohr umfaßt, durch welches ein Fluid quer zur Ausbreitungsrichtung der stehenden elektromagnetischen Welle führbar ist, wobei die Pyrolysezelle in dem Fluidrohr gebildet ist.

15. Vorrichtung nach Anspruch 14, **dadurch gekennzeichnet, daß** die Pyrolysezelle durch ein erstes Metallgitter und ein in einer Fluidführungsrichtung beabstandet angeordnetes zweites Metallgitter begrenzt ist.

16. Verfahren zur Reinigung eines gasförmigen Fluids, bei dem das Fluid durch eine Pyrolysezelle geführt wird, welche mit einer stehenden elektromagnetischen Welle beaufschlagt wird, **dadurch gekennzeichnet, daß** das Fluid vor Eintritt in die Pyrolysezelle durch eine Kühlfalle geführt wird.

17. Verfahren nach Anspruch 16, **dadurch gekennzeichnet, daß** das Fluid vor Eintritt in die Kühlfalle durch eine Filtervorrichtung geführt wird.

18. Verfahren nach Anspruch 17, **dadurch gekennzeichnet, daß** das Fluid in der Filtervorrichtung getrocknet wird.

19. Verfahren nach Anspruch 17 oder 18, **dadurch gekennzeichnet, daß** beim Ausheizen der Filtervorrichtung diese an die Pyrolysevorrichtung gekoppelt ist oder wird.

20. Verfahren nach einem der Ansprüche 17 bis 19, **dadurch gekennzeichnet, daß** die Filtervorrichtung mit Abwärme der Pyrolysevorrichtung und/oder der Kühlfalle beheizt wird.

## Claims

1. Device for cleaning a gaseous fluid, comprising a pyrolysis device (10) with a pyrolysis cell, in which the fluid can be subjected to a standing electromagnetic wave, and a cold trap (18) connected before the pyrolysis device (10) for separating contaminants, through which the fluid is directed before entering the pyrolysis cell.

2. Device according to Claim 1, **characterised in that** the cold trap (18) is adjustable and/or configured such that hydrocarbons can be separated.

3. Device according to Claim 1 or 2, **characterised in that** the cold trap (18) has a filter device (20) connected before it, through which the fluid is directed before entering the cold trap (18).

4. Device according to Claim 3, **characterised in that** the filter device (20) comprises a drying device (24) for the fluid.

5. Device according to Claim 4, **characterised in that** the drying device (24) is configured as a water separator.

6. Device according to Claim 4 or 5, **characterised in that** the drying device (24) has hygroscopic drying agents.

7. Device according to one of Claims 3 to 6, **characterised in that** the filter device (20) can be heated.

8. Device according to one of Claims 3 to 7, **characterised in that** an outlet of the filter device (20) can be connected to an inlet (34) of the pyrolysis device (10).

9. Device according to one of the preceding claims, **characterised in that** the device has one or more couplings (36;38) for scavenging gas.

10. Device according to one of Claims 3 to 9, **characterised in that** waste heat from the pyrolysis device (10) and/or the cold trap (18) can be fed to the filter device (20).

11. Device according to Claim 10, **characterised in that** a conduit (28) for waste heat is arranged between the pyrolysis device (10) and the filter device (20).

12. Device according to Claim 10 or 11, **characterised in that** a conduit (30) for waste heat is arranged between the cold trap (18) and the filter device (20).

13. Device according to Claim 11 or 12, **characterised in that** heat from the pyrolysis device (10) can be transferred to the filter device (20) by means of a heat transfer medium.

14. Device according to one of the preceding claims, **characterised in that** the pyrolysis device (10) comprises a microwave generator, a waveguide, which is coupled to the microwave generator, and a fluid pipe, through which a fluid can be conducted transversely to the direction of propagation of the standing electromagnetic wave, wherein the pyrolysis cell is formed in the fluid pipe.

15. Device according to Claim 14, **characterised in that** the pyrolysis cell is delimited by a first metal grid and a second metal grid arranged at a spacing in the direction of fluid conduction.

16. Method for cleaning a gaseous fluid, wherein the fluid is directed through a pyrolysis cell, which is subjected to a standing electromagnetic wave, **characterised in that** the fluid is directed through a cold trap before entering the pyrolysis cell.

17. Method according to Claim 16, **characterised in that** the fluid is directed through a filter device before entering the cold trap.

18. Method according to Claim 17, **characterised in that** fluid is dried in the filter device.

19. Method according to Claim 17 or 18, **characterised in that**, when baking out the filter device, it is coupled to the pyrolysis device.

20. Method according to one of Claims 17 to 19, **characterised in that** the filter device is heated with waste heat of the pyrolysis device and/or of the cold trap.

## Revendications

1. Dispositif pour la purification d'un fluide gazeux, comprenant un dispositif de pyrolyse (10) doté d'une cellule de pyrolyse, dans lequel le fluide peut être alimenté avec une onde électromagnétique stationnaire, et un piège froid (18) connecté en amont du dispositif de pyrolyse (10) pour séparer des impuretés, au travers duquel le fluide est conduit avant l'entrée dans la cellule de pyrolyse.

2. Dispositif selon la revendication 1, **caractérisé en ce que** le piège froid (18) est réglable et/ou est constitué de telle sorte que des hydrocarbures puissent être séparés.

3. Dispositif selon la revendication 1 ou 2, **caractérisé en ce qu'**un dispositif de filtrage (20) est connecté en amont du piège froid (18), au travers duquel le fluide est conduit avant l'entrée dans le piège froid (18).

4. Dispositif selon la revendication 3, **caractérisé en ce que** le dispositif de filtrage (20) comprend un dispositif de séchage (24) pour le fluide.

5. Dispositif selon la revendication 4, **caractérisé en ce que** le dispositif de séchage (24) est constitué comme un séparateur d'eau.

6. Dispositif selon la revendication 4 ou 5, **caractérisé en ce que** le dispositif de séchage (24) présente un moyen de séchage hygroscopique.

7. Dispositif selon l'une quelconque des revendications 3 à 6, **caractérisé en ce que** le dispositif de filtrage (20) est apte à être chauffé.

8. Dispositif selon l'une quelconque des revendications 3 à 7, **caractérisé en ce qu'**une sortie du dispositif de filtrage (20) est apte à être reliée à une entrée (34) du dispositif de pyrolyse (10).

9. Dispositif selon l'une quelconque des revendications précédentes, **caractérisé en ce que** le dispositif présente un ou plusieurs couplages (36 ; 38) pour le fluide de balayage.

10. Dispositif selon l'une quelconque des revendications 3 à 9, **caractérisé en ce que** la chaleur rejetée par le dispositif de pyrolyse (10) et/ou le piège froid (18) peut être acheminée au dispositif de filtrage (20).

11. Dispositif selon la revendication 10, **caractérisé en ce qu'**un conduit (28) pour la chaleur rejetée est placé entre le dispositif de pyrolyse (10) et le dispositif de filtrage (20).

12. Dispositif selon la revendication 10 ou 11, **caractérisé en ce qu'**un conduit (30) pour la chaleur rejetée est placé entre le piège froid (18) et le dispositif de filtrage (20).

13. Dispositif selon la revendication 11 ou 12, **caractérisé en ce que** la chaleur du dispositif de pyrolyse (10) peut être transmise au dispositif de filtrage (20) au moyen d'un agent de transmission de la chaleur.

14. Dispositif selon l'une quelconque des revendications précédentes, **caractérisé en ce que** le dispositif de pyrolyse (10) comprend un générateur de micro-ondes, un conducteur creux qui est couplé au générateur de micro-ondes et un tuyau de fluide par lequel un fluide peut être conduit perpendiculairement au dispositif de diffusion de l'onde électromagnétique stationnaire, moyennant quoi la cellule de pyrolyse est formée dans le tube de fluide.

15. Dispositif selon la revendication 14, **caractérisé en ce que** la cellule de pyrolyse est limitée par un premier grillage métallique et un deuxième grillage métallique disposé à distance dans un dispositif de conduite de fluide.

16. Procédé de purification d'un fluide gazeux dans lequel le fluide est conduit au travers d'une cellule de pyrolyse qui est alimentée avec une onde électromagnétique stationnaire, **caractérisé en ce que** le fluide est conduit avant l'entrée dans la cellule de pyrolyse au travers d'un piège froid.

17. Procédé selon la revendication 16, **caractérisé en ce que** le fluide est conduit avant l'entrée dans le piège froid au travers d'un dispositif de filtrage.

18. Procédé selon la revendication 17, **caractérisé en ce que** le fluide est séché dans le dispositif de filtrage.

19. Procédé selon la revendication 17 ou 18, **caractérisé en ce que**, lors du chauffage du dispositif de filtrage, celui-ci est couplé au dispositif de pyrolyse.

20. Procédé selon l'une quelconque des revendications 17 à 19, **caractérisé en ce que** le dispositif de filtrage est chauffé avec la chaleur rejetée du dispositif de pyrolyse et/ou du piège froid.
